# EUROPEAN PATENT SPECIFICATION

(11) **EP 2 212 946 B1**
(45) Date of publication and mention of the grant of the patent: **27.02.2013**
(21) Application number: 08838539.8
(22) Date of filing: 10.10.2008
(51) Int. Cl.: H01M 2/16, H01M 10/0525

(54) **MICROPOROUS MEMBRANES AND METHODS FOR MAKING AND USING SUCH MEMBRANES**
MIKROPORÖSE MEMBRANEN UND VERFAHREN ZUR HERSTELLUNG UND VERWENDUNG SOLCHER MEMBRANEN
MEMBRANES MICROPOREUSES ET PROCÉDÉS DE PRODUCTION ET D'UTILISATION DESDITES MEMBRANES

(30) Priority: 12.10.2007 US 871584; 02.11.2007 US 934491; 09.11.2007 US 937956
(43) Date of publication of application: 04.08.2010
(73) Proprietor: Toray Battery Separator Film Co., Ltd., Tochigi (JP)
(72) Inventor: KIKUCHI, Shintaro, Saitama-shi Saitama 337-0017 (JP); TAKITA, Kotaro, Yokohama-shi Kanagawa-ken 232 0071 (JP)
(74) Representative: Webster, Jeremy Mark
(86) International application number: PCT/JP2008/068912
(87) International publication number: WO 2009/048173

(56) References cited:
- WO-A-2007/117042
- WO-A-2008/026780
- US-A1- 2007 221 568

## Description

### FIELD OF THE INVENTION

The present invention relates to a microporous membrane having excellent electrochemical stability and low heat shrinkage, as well as high permeability and heat resistance, when used as a battery separator. This microporous membrane also has good mechanical strength, electrolytic solution absorption and compression resistance properties. The invention also relates to a method for producing such a microporous membrane.

### BACKGROUND OF THE INVENTION

Microporous membranes are useful as separators for primary batteries and secondary batteries such as lithium ion secondary batteries, lithium-polymer secondary batteries, nickel-hydrogen secondary batteries, nickel-cadmium secondary batteries, nickel-zinc secondary batteries, silver-zinc secondary batteries, etc. When the microporous membrane is used as a battery separator, particularly for lithium ion batteries, the membrane's performance significantly affects the battery's properties, productivity, and safety. Accordingly, the microporous membrane should have appropriate permeability, mechanical properties, heat resistance, dimensional stability, shut down properties, melt down properties, etc. It is desirable for such batteries to have a relatively low shutdown temperature and a relatively high meltdown temperature for improved battery safety properties, particularly for batteries exposed to high temperatures under operating conditions. High separator permeability is desirable for high capacity batteries. A separator with high mechanical strength is desirable for improved battery assembly and fabrication.

The optimization of material compositions, stretching conditions, heat treatment conditions, etc., has been proposed to improve the properties of microporous membranes used as battery separators. For example, JP6-240036A discloses a microporous polyolefin membrane having improved pore diameter and a sharp pore diameter distribution. The membrane is made from a polyethylene resin containing 1% or more by mass of ultra-high molecular weight polyethylene having a weight average molecular weight ("Mw") of 7 x 10⁵ or more, the polyethylene resin having a molecular weight distribution (weight-average molecular weight/number-average molecular weight) of 10 to 300, and the microporous polyolefin membrane having a porosity of 35 to 95%, an average penetrating pore diameter of 0.05 to 0.2 µm, a rupture strength (15 mm width) of 0.2 kg or more, and a pore diameter distribution (maximum pore diameter/average penetrating pore diameter) of 1.5 or less. This microporous membrane is produced by extruding a melt-blend of the above polyethylene resin and a membrane-forming solvent through a die, stretching the gel-like sheet obtained by cooling at a temperature from the crystal dispersion temperature ("Tcd") of the above polyethylene resin to the melting point +10°C, removing the membrane-forming solvent from the gel-like sheet, re-stretching the resultant membrane to 1.5 to 3 fold as an area magnification at a temperature of the melting point of the above polyethylene resin -10°C or less, and heat-setting it at a temperature from the crystal dispersion temperature of the above polyethylene resin to the melting point.

WO 1999/48959 discloses a microporous polyolefin membrane having suitable strength and permeability, as well as a uniformly porous surface without local permeability variations. The membrane is made of a polyolefin resin, for instance, high density polyethylene, having an Mw of 50,000 or more and less than 5,000,000, and a molecular weight distribution of 1 or more to less than 30, which has a network structure with fine gaps formed by uniformly dispersed micro-fibrils, having an average micro-fibril size of 20 to 100 nm and an average micro-fibril distance of 40 to 400 nm. This microporous membrane is produced by extruding a melt-blend of the above polyolefin resin and a membrane-forming solvent through a die, stretching a gel-like sheet obtained by cooling at a temperature that is 50°C below the melting point of the polyolefin resin or higher and lower than the melting point, removing the membrane-forming solvent from the gel-like sheet, re-stretching it to 1.1 to 5 fold at a temperature that is 50°C below the melting point of the polyolefin resin or higher and lower than the melting point, and heat-setting it at a temperature from the crystal dispersion temperature of the above polyolefin resin to the melting point.

WO 2000/20492 discloses a microporous polyolefin membrane of improved permeability which is characterized by fine polyethylene fibrils having an Mw of 5 x 10⁵ or more, the composition comprising polyethylene. The microporous polyolefin membrane has an average pore diameter of 0.05 to 5 µm, and the percentage of lamellas at angles θ of 80 to 100° relative to the membrane surface is 40% or more in longitudinal and transverse cross sections. This polyethylene composition comprises 1 to 69% by weight of ultra-high molecular weight polyethylene having an Mw of 7 x 10⁵ or more, 1 to 98% by weight of high density polyethylene and 1 to 30% by weight of low density polyethylene. This microporous membrane is produced by extruding a melt-blend of the above polyethylene composition and a membrane-forming solvent through a die, stretching a gel-like sheet obtained by cooling, heat-setting it at a temperature from the crystal dispersion temperature of the above polyethylene or its composition to the melting point +30°C, and removing the membrane-forming solvent.

WO 2002/072248 discloses a microporous membrane having improved permeability, particle-blocking properties and strength. The membrane is made using a polyethylene resin having an Mw of less than 380,000. The membrane has a porosity of 50 to 95% and an average pore diameter of 0.01 to 1 µm. This microporous membrane has a three-dimensional network skeleton formed by micro-fibrils having an average diameter of 0.2 to 1 µm connected to each other throughout the overall microporous membrane, and openings defined by the skeleton to have an average diameter of 0.1 µm or more and less than 3 µm. This microporous membrane is produced by extruding a melt-blend of the above polyethylene resin and a membrane-forming solvent through a die, removing the membrane-forming solvent from the gel-like sheet obtained by cooling, stretching it to 2 to 4 fold at a temperature of 20 to 140°C, and heat-treating the stretched membrane at a temperature of 80 to 140°C.

WO 2005/113657 discloses a microporous polyolefin membrane having suitable shutdown properties, meltdown properties, dimensional stability, and high-temperature strength. The membrane is made using a polyolefin composition comprising (a) polyethylene resin containing 8 to 60% by mass of a component having a molecular weight of 10,000 or less, and an Mw/Mn ratio of 11 to 100, wherein Mn is the number-average molecular weight of the polyethylene resin, and a viscosity-average molecular weight ("Mv") of 100,000 to 1,000,000, and (b) polypropylene. The membrane has a porosity of 20 to 95%, and a heat shrinkage ratio of 10% or less at 100°C. This microporous polyolefin membrane is produced by extruding a melt-blend of the above polyolefin and a membrane-forming solvent through a die, stretching the gel-like sheet obtained by cooling, removing the membrane-forming solvent, and annealing the sheet.
US 2007/0221568 describes a microporous membrane made of polyolefins which comprises polyethylene (PEA) 8-60 wt.% of which is accounted for by components having a molecular weight of 10,000 or lower and in which the ratio of the weight-average molecular weight (Mw) to the number-average molecular weight (Mn), Mw/Mn, is 11-100 and the viscosity-average molecular weight (Mv) is 100,000-1,000.000 and polypropylene, and which has a content of components having a molecular weight of 10,000 or lower of 8-60 wt. %, a porosity of 20-95%, and a degree of thermal shrinkage at 100°C of 10% or lower.

With respect to the properties of separators, not only permeability, mechanical strength, dimensional stability, shut down properties and melt down properties, but also properties related to battery productivity such as electrolytic solution absorption, and battery cyclability, such as electrolytic solution retention properties, have recently been given importance. Especially important to battery manufacturers is that the separators have improved electrochemical stability and low heat shrinkage, while maintaining high permeability and heat resistance. In particular, electrodes for lithium ion batteries expand and shrink according to the intrusion and departure of lithium, and an increase in battery capacity leads to larger expansion ratios. Because separators are compressed when the electrodes expand, it is desired that the separators when compressed suffer as little a decrease as possible in electrolytic solution retention.

Moreover, even though improved microporous membranes are disclosed in JP6-240036A, WO 1999/48959, WO 2000/20492, WO 2002/072248, and WO2005/113657 further improvements are still needed, particularly in membrane electrochemical stability and low heat shrinkage, while maintaining high permeability and heat resistance. It is thus desired to form battery separators from microporous membranes having improved electrochemical stability and low heat shrinkage, while maintaining high permeability and heat resistance, with good mechanical strength, compression resistance and electrolytic solution absorption.

### SUMMARY OF THE INVENTION

The present invention provides a microporous membrane according to claim 1 and a method for producing a microporous membrane according to claim 5. The present invention relates to the discovery of a microporous membrane having a good balance of important properties, including improved electrochemical stability and low heat shrinkage, while maintaining high permeability and heat resistance, with good mechanical strength, compression resistance and electrolytic solution absorption. Of particular importance when used as a battery separator, the present microporous membrane exhibits excellent heat shrinkage, melt down temperature and thermal mechanical properties, i.e. reduced maximum shrinkage in the molten state. The micro porous membrane of the present invention can be produced by steps comprising (1) combining a polyolefin composition and at least one diluent or solvent, for example a membrane-forming solvent, to form a mixture (e.g., a polyolefin solution), the polyolefin composition comprising (a) from about 40 to about 60% of a first polyethylene resin having an a weight average molecular weight ("Mw") < 1.0 x 10⁶, e.g., in the range of about 4.5 x 10⁵ to about 6.5 x 10⁵ and a molecular weight distribution ("MWD") ≤ 100, e.g., in the range of about 1.5 to 10, or about 3 to about 5, (b) from about 20 to about 40% of a first polypropylene resin having an Mw ≥ 0.8 x 10⁶, e.g., in the range of from 0.8 x 10⁶ to about 2 x 10⁶, an MWD ≤ 100, e.g., in the range of from about 1 to about 100, or about 1.5 to 10, and a ΔHm ≥ 80 J/g, (c) from about 10 to about 30% of a second polypropylene resin having an Mw < 0.8 x 10⁶, e.g., in the range of from about 4 x 10⁵ to about 7 x 10⁵, an MWD ≤ 100, e.g., in the range of from about 2 to about 100, and a ΔHm ≥ 80 J/g, and (d) from about 0 to about 10% of a second polyethylene resin having an Mw ≥ 1.0 x 10⁶, e.g, in the range of about 1.1 x 10⁶ to about 5 x 10⁶ and an MWD ≤ 100, e.g., in the range of about 2 to about 10, or from about 4 to about 6, the percentages being based on the mass of the polyolefin composition, (2) extruding the polyolefin solution through a die to form an extrudate, (3) cooling the extrudate to form a cooled extrudate, (4) stretching the cooled extrudate in at least one direction to form a stretched sheet, (5) removing at least a portion of the diluent or solvent from the stretched sheet to form a membrane, (6) optionally stretching the membrane to a magnification of from about 1.1 to about 1.8 fold in at least one direction to form a stretched membrane, and (7) heat-setting the membrane product of step (5) or (6) to form the final microporous membrane.

The membrane can have a surface roughness of 3 x 10² nm or more according to claim 2. In an embodiment, the upper limit on the surface roughness of the microporous membrane is 3 x 10³ nm. With surface roughness within this range, the microporous membrane has a large contact area with an electrolytic solution when used as a battery separator, exhibiting suitable electrolytic solution absorption characteristics.

In one embodiment, the resins used in forming the mixture comprise (a) a first polyethylene resin having an Mw in the range of from 5 x 10⁵ to 6.5 x 10⁵, and an MWD in the range of from 3 to 5, (b) a first polypropylene resin having an Mw of from 0.9 x 10⁶ to 1.5 x 10⁶, an MWD in the range of from 2 to 6, (c) a second polypropylene resin having an Mw from 5.7 x 10⁵ to 6.6 x 10⁵, an MWD of from 3 to 15, and (d) a second polyethylene resin having an Mw of from 1.0 x 10⁶ to 3 x 10⁶, and an MWD in the range of from 4 to 6. The microporous membrane may suitably comprise 50% or less by mass of polypropylene obtained from polypropylene resin and 50% by mass or more of polyethylene obtained from polyethylene resins, based on the mass of the microporous membrane.

In the above method, the stretching of the microporous membrane in optional step (6) may be called "re-stretching", because it is conducted after the stretching of the cooled extrudate in step (4).

In yet another embodiment, the invention relates to a microporous membrane comprising a heat-setting treatment step (4i) between steps (4) and (5) wherein the stretched sheet is heat-set at a temperature of the stretching temperature ±5°C, a heat roll treatment step (4ii) following step (4i) and before step (5) wherein the stretched sheet contacts a heated roller at a temperature from the crystal dispersion temperature of the polyolefin composition to the melting point +10°C of the polyolefin composition, and a hot solvent treatment step (4iii) following step (4ii) and before step (5) wherein the stretched sheet is contacted with a hot solvent.

### DETAILED DESCRIPTION OF THE INVENTION

The invention is based in part on the discovery that microporous membranes comprising specific polyolefins as described below have relatively low heat shrinkage and good electrochemical stability.

The present inventions relates to a method for making a microporous film having a good balance of important properties, including excellent electrochemical stability and low heat shrinkage, while maintaining high permeability and heat resistance, with good mechanical strength, compression resistance and electrolytic solution absorption. As an initial step, a certain specific polyethylene resin and certain specific polypropylene resins, and optionally another certain specific polyethylene resin, are combined, e.g. by melt-blending, to form a polyolefin composition.

### [1] Production of the melt

### (1) Polyolefin Composition

The first polyolefin composition can comprise (a) from 40 to 60% (e.g., 45 to 55%) of a first polyethylene resin having an Mw in the range of from 4.5 x 10⁵ to 6.5 x 10⁵ and an MWD of from 3 to 5, (b) from 20 to 40% (e.g., 30 to 40%) of a first polypropylene resin having an Mw in the range of 0.9 x 10⁶ to 1.5 x 10⁶, an MWD of from 2 to 6, (c) from 10 to 30% (e.g., 10 to 15%) of a second polypropylene resin having an Mw of from 4 x 10⁵ to 7 x 10⁵, an MWD in the range of 2 to 20, and (d) from 0 to 10% of a second polyethylene resin having an Mw of from 1.1 x 10⁶ to 5 x 10⁶ and an MWD in the range of from 4 to 6, the percentages being based on the mass of the polyolefin composition.

### (a) Polyethylene resins

### (i) Composition

A non-limiting example of the first polyethylene resin for use herein is one that has a Mw of from about 5 x 10⁵ to about 6 x 10⁵ and an MWD from 3 to 5. The first polyethylene resin can be an ethylene homopolymer, or an ethylene/α-olefin copolymer, such as, for example, one containing a small amount, e.g. about 5 mole %, of a third α-olefin. The third α-olefin, which is not ethylene, is preferably propylene, butene-1, pentene-1, hexene-1, 4-methylpentene-1, octene-1, vinyl acetate, methyl methacrylate, or styrene or combinations thereof. Such copolymer is preferably produced using a single-site catalyst.

The second polyethylene resin, for example an ultra-high molecular weight polyethylene (UHMWPE) resin, is optional and has an MW in the range of from 1.1 x 10⁶ to 5 x 10⁶ and an MWD in the range of from 4 to 6. A non-limiting example of the second polyethylene resin for use herein is one that has an Mw of from about 1.2 x 10⁶ to about 3 x 10⁶. The second polyethylene resin can be an ethylene homopolymer, or an ethylene/α-olefin copolymer, such as, for example, one containing a small amount, e.g. about 5 mole %, of a third α-olefin. The third α-olefin, which is not ethylene, can be, for example, propylene, butene-1, pentene-1, hexene-1, 4-methylpentene-1, octene-1, vinyl acetate, methyl methacrylate, or styrene or combinations thereof. Such copolymer is preferably produced using a single-site catalyst.

### (ii) Polyethylene Mw and MWD Detennination

MWD is equal to the ratio of Mw to the number-average molecular weight ("Mn"). The MWD of the polymers used to produce the microporous membrane can be controlled e.g., by a multi-stage polymerization. The MWD of the polyethylene composition can be controlled by controlling the molecular weights and mixing ratios of the polyethylene components.

Mw and Mn of the polyethylenes are determined using a High Temperature Size Exclusion Chromatograph, or "SEC", (GPC PL 220, Polymer Laboratories), equipped with a differential refractive index detector (DRI). Three PL gel Mixed-B columns (available from Polymer Laboratories) are used. The nominal flow rate is 0.5 cm³/min, and the nominal injection volume was 300 mL. Transfer lines, columns, and the DRI detector were contained in an oven maintained at 145°C. The measurement is made in accordance with the procedure disclosed in *"*Macromolecules, Vol. 34, No. 19, pp. 6812-6820 (2001)".

The GPC solvent used is filtered Aldrich reagent grade 1,2,4-Trichlorobenzene (TCB) containing approximately 1000 ppm of butylated hydroxy toluene (BHT). The TCB was degassed with an online degasser prior to introduction into the SEC. Polymer solutions were prepared by placing dry polymer in a glass container, adding the desired amount of above TCB solvent, then heating the mixture at 160°C with continuous agitation for about 2 hours. The concentration of UHMWPE solution was 0.25 to 0.75mg/ml. Sample solution will be filtered off-line before injecting to GPC with 2µm filter using a model SP260 Sample Prep Station (available from Polymer Laboratories).

The separation efficiency of the column set is calibrated with a calibration curve generated using a seventeen individual polystyrene standards ranging in Mp from about 580 to about 10,000,000, which is used to generate the calibration curve. The polystyrene standards are obtained from Polymer Laboratories (Amherst, MA). A calibration curve (logMp vs. retention volume) is generated by recording the retention volume at the peak in the DRI signal for each PS standard, and fitting this data set to a 2nd-order polynomial. Samples are analyzed using IGOR Pro, available from Wave Metrics, Inc.

### (a) Polypropylene resins

### (i) Composition

The first polypropylene resin for use herein has an Mw in the range of from 0.9 x 10⁶ to 1.5 x 10⁶, a heat of fusion ("ΔHm") of 105 ≤ ΔHm ≤ 125, and an MWD in the range of from 2 to 6, and can be a propylene homopolymer or a copolymer of propylene and another, i.e. a fourth, olefin, though the homopolymer is preferable. The copolymer may be a random or block copolymer. The fourth olefin, which is an olefin other than propylene, includes α-olefins such as ethylene, butene-1, pentene-1, hexene-1,4-methylpentene-1, octene-1, vinyl acetate, methyl methacrylate, styrene, etc., and diolefins such as butadiene, 1,5-hexadiene, 1,7-octadiene, 1,9-decadiene, etc. The percentage of the fourth olefin in the propylene copolymer is preferably in a range that does not deteriorate the properties of the microporous membrane such as heat resistance, compression resistance, heat shrinkage resistance, etc., and is preferably less than about 10 mole %, e.g. from about 0 to less than about 10 mole %.

The second polypropylene resin for use herein has an Mw in the range of from 4 x 10⁵ to 7 x 10⁵, for example from about 5.7 x 10⁵ to about 6.6 x 10⁵, ΔHm of 90 ≤ ΔHm < 105 an MWD in the range of from 2 to 20, for example from about 3 to about 15, and can be a propylene homopolymer or a copolymer of propylene and another, i.e. a fourth, olefin, though the homopolymer is preferable. The copolymer may be a random or block copolymer. The fourth olefin, which is an olefin other than propylene, includes α-olefins such as ethylene, butene-1, pentene-1, hexene-1, 4-methylpentene-1, octene-1, vinyl acetate, methyl methacrylate, styrene, etc., and diolefins such as butadiene, 1,5-hexadiene, 1,7-octadiene, 1,9-decadiene, etc. The percentage of the fifth olefin in the propylene copolymer is preferably in a range that does not deteriorate the properties of the microporous membrane such as heat resistance, compression resistance, heat shrinkage resistance, etc., and is preferably less than about 10 mole %, e.g., from about 0 to less than about 10 mole %. In an embodiment, the ΔHm of the first polypropylene is greater than the ΔHm of the second polypropylene.

The amount of polypropylene resin in the polyolefin composition is 50% or less by mass based on 100% of the mass of the polyolefin composition. When the percentage of polypropylene is more than 50% by mass, the resultant microporous membrane has relatively lower strength and poorer permeability. The percentage of polypropylene resin may be, for example, from about 35 to about 50% by mass of the polyolefin composition.

The ΔHm of the polypropylene is determined by differential scanning calorimetry (DSC). The DSC is conducted using a TA Instrument MDSC 2920 or Q1000 Tzero-DSC and data analyzed using standard analysis software. Typically, 3 to 10 mg of polymer is encapsulated in an aluminum pan and loaded into the instrument at room temperature. The sample is cooled to either -130°C or -70°C and heated to 210°C at a heating rate of 10 °C/minute to evaluate the glass transition and melting behavior for the sample. The sample is held at 210°C for 5 minutes to destroy its thermal history. Crystallization behavior is evaluated by cooling the sample from the melt to sub-ambient temperature at a cooling rate of 10°C/minute. The sample is held at the low temperature for 10 minutes to fully equilibrate in the solid state and achieve a steady state. Second heating data is measured by heating this melt crystallized sample at 10°C/minute. Second heating data thus provides phase behavior for samples crystallized under controlled thermal history conditions. The endothermic melting transition (first and second melt) and exothermic crystallization transition are analyzed for onset of transition and peak temperature. The area under the curve is used to determine the ΔHm according to JIS K7122.

The Mw and MWD of the polypropylene are measured in accordance with the procedures described in patent publication US 2008/0057389.

### (2) Other components

In addition to the above components, the polyolefin solution can contain (a) additional polyolefin and/or (b) heat-resistant polymer resins having melting points or glass transition temperatures (Tg) of about 170°C or higher, in amounts not deteriorating the properties of the microporous membrane, for example 10% or less by mass based on the polyolefin composition.

### (a) Additional Polyolefins

The additional polyolefin can be at least one of (a) polybutene-1, polypentene-1, poly-4-methylpentene-1, polyhexene-1, polyoctene-1, polyvinyl acetate, polymethyl methacrylate, polystyrene and an ethylene/α-olefin copolymer, each of which may have an Mw of form 1 x 10⁴ to 4 x 10⁶, and (b) a polyethylene wax having an Mw of form 1 x 10³ to 1 x 10⁴. Polybutene-1, polypentene-1, poly-4-methylpentene-1, polyhexene-1, polyoctene-1, polyvinyl acetate, polymethyl methacrylate and polystyrene are not restricted to homopolymers, but may be copolymers containing still other α-olefins.

### (b) Heat-resistant resins

The heat-resistant resins can be, for example, (a) amorphous resins having melting points of about 170°C or higher, which may be partially crystalline, and (b) completely amorphous resins having Tg of about 170°C or higher and mixtures thereof. The melting point and Tg are determined by differential scanning calorimetry (DSC) according to method JIS K7121. Specific examples of the heat-resistant resins include polyesters such as polybutylene terephthalate (melting point: about 160-230°C), polyethylene terephthalate (melting point: about 250-270°C), etc., fluororesins, polyamides (melting point: 215-265°C), polyarylene sulfide, polyimides (Tg: 280°C or higher), polyamide imides (Tg: 280°C), polyether sulfone (Tg: 223°C), polyetheretherketone (melting point: 334°C), polycarbonates (melting point: 220-240°C), cellulose acetate (melting point: 220°C), cellulose triacetate (melting, point: 300°C), polysulfone (Tg: 190°C), polyetherimide (melting point: 216°C), etc.

### (c) Content

The total amount of the additional polyolefin and the heat-resistant resin is preferably 20% or less, for example from about 0 to about 20%, by mass per 100% by mass of the polyolefin solution.

### [2] Production of the microporous membrane

A method for producing the microporous membrane comprises the steps of (1) combining certain specific polyolefins (generally in the form of polyolefin resins) and at least one diluent (e.g., a solvent) to form a mixture (e.g., a polyolefin solution), (2) extruding the mixture through a die to form an extrudate, (3) cooling the extrudate to form a cooled extrudate, (4) stretching the cooled extrudate to form a stretched sheet, (5) removing at least a portion of the diluent from the stretched sheet to form a diluent-removed membrane, (6) optionally stretching the diluent-removed membrane to form a stretched membrane, and (7) heat-setting the membrane product of step (5) or step (6) to form the microporous membrane. A heat-setting treatment step (4i), a heat roll treatment step (4ii), and/or a hot solvent treatment step (4iii) may be conducted between the steps (4) and (5), if desired. A heat-setting treatment step (5i) may be conducted between the steps (5) and (6). A step (5ii) of cross-linking with ionizing radiations following step (5i) prior to step (6), and a hydrophilizing treatment step (7i) and a surface-coating treatment step (7ii) may be conducted after the step (7), if desired. Process conditions, as described below, can generally be the same as those described in US2008/0057389, for example.

### (1) Preparation of the polyolefin solution

In an embodiment, the polyolefin resins are combined with at least one diluent (e.g., a solvent) to prepare a mixture of polyolefin and diluent (e.g., a polyolefin solution). Alternatively, the polyolefin resins may be combined, for example, by melt-blending, dry mixing, etc., to make a polyolefin composition, which is then combined with at least one solvent or diluent to prepare the mixture. The mixture may contain, if desired, various additives such as anti-oxidants, fine silicate powder (pore-forming material), etc., in amounts which do not deteriorate the properties of the present invention.

To enable stretching at relatively higher magnifications, the diluent or solvent, e.g. a membrane-forming solvent, is preferably liquid at room temperature. The liquid solvents can be, for example, aliphatic, alicyclic or aromatic hydrocarbons such as nonane, decane, decalin, p-xylene, undecane, dodecane, liquid paraffin, mineral oil distillates having boiling points comparable to those of the above hydrocarbons, and phthalates liquid at room temperature such as dibutyl phthalate, dioctyl phthalate, etc. To most effectively obtain an extrudate having a stable solvent content, it is preferable to use a non-volatile liquid solvent such as liquid paraffin. In an embodiment, one or more solid solvents which are miscible with the polyolefin composition during, for example, melt-blending, but solid at room temperature may be added to the liquid solvent. Such solid solvents are preferably stearyl alcohol, ceryl alcohol, paraffin waxes, etc. In another embodiment, solid solvent can be used without liquid solvent. However, when only the solid solvent is used, uneven stretching, etc., can occur.

The viscosity of the liquid solvent is preferably from about 30 to about 500 cSt, more preferably from about 30 to about 200 cSt, when measured at a temperature of 25°C. When the viscosity at 25°C is less than 30 cSt, the polyolefin solution may foam, resulting in difficulty in blending. On the other hand, when the viscosity is more than 500 cSt, the removal of the liquid solvent can be difficult.

Though not particularly critical, the uniform melt-blending of the polyolefin solution is preferably conducted in a double-screw extruder to prepare a high concentration polyolefin solution. The diluent or solvent, e.g. a membrane-forming solvent, may be added before starting melt-blending, or supplied to the double-screw extruder in an intermediate portion during blending, though the latter is preferable.

The melt-blending temperature of the polyolefin solution is preferably in a range of the melting point ("Tm") of the polyethylene resin having the lowest melting point of the polyethylene resins used to produce the mixture. The melt-blending temperature can be, e.g., in the range of +10°C to Tm +120°C. The melting point can be measured by differential scanning calorimetry (DSC) according to JIS K7121. In an embodiment, the melt-blending temperature is from about 140 to about 250°C, more preferably from about 170 to about 240°C, particularly where the polyethylene resin has a melting point of about 130 to about 140°C.

To obtain a good membrane structure in the present invention, the concentration of the polyolefin composition in the polyolefin solution is preferably from about 15 to about 50% by mass, more preferably from about 20 to about 45% by mass, based on the mass of the polyolefin solution.

The ratio L/D of the screw length L to the screw diameter D in the double-screw extruder is preferably in a range of from about 20 to about 100, more preferably in a range of from about 35 to about 70. When L/D is less than 20, melt-blending can be inefficient. When L/D is more than 100, the residence time of the polyolefin solution in the double-screw extruder can be too long. In this case, the membrane's molecular weight deteriorates as a result of excessive shearing and heating, which is undesirable. The cylinder of the double-screw extruder preferably has an inner diameter of from about 40 to about 100 mm.

In the double-screw extruder, the ratio Q/Ns of the amount Q (kg/h) of the polyolefin solution charged to the number of revolution Ns (rpm) of a screw is preferably from about 0.1 to about 0.55 kg/h/rpm. When Q/Ns is less than 0.1 kg/h/rpm, the polyolefin can be damaged by shearing, resulting in decrease in strength and meltdown temperature. When Q/Ns is more than 0.55 kg/h/rpm, uniform blending cannot be achieved. Q/Ns is more preferably from about 0.2 to about 0.5 kg/h/rpm. The number of revolutions Ns of the screw is preferably 180 rpm or more. Though not particularly critical, the upper limit of the number of revolutions Ns of the screw is preferably about 500 rpm.

### (2) Extrusion

The components of the polyolefin solution can be melt-blended in the extruder and extruded from a die. In another embodiment, the components of the polyolefin solution can be extruded and then pelletized. In this embodiment, the pellets can be melt-blended and extruded in a second extrusion to make a gel-like molding or sheet. In either embodiment, the die can be a sheet-forming die having a rectangular orifice, a double-cylindrical, hollow die, an inflation die, etc. Although the die gap is not critical, in the case of a sheet-forming die, the die gap is preferably from about 0.1 to about 5 mm. The extrusion temperature is preferably from about 140 to about 250°C, and the extruding speed is preferably from about 0.2 to about 15 m/minute.

### (3) Formation of cooled extrudate

The extrudate from the die is cooled to form a cooled extrudate, generally in the form of a high polyolefin content gel-like molding or sheet. Cooling is preferably conducted at least to a gelation temperature at a cooling rate of about 50°C/minute or more. Cooling is preferably conducted to about 25°C or lower. Such cooling sets the micro-phase of the polyolefin separated by the membrane-forming solvent. Generally, the slower cooling rate provides the gel-like sheet with larger pseudo-cell units, resulting in a coarser higher-order structure. On the other hand, a higher cooling rate results in denser cell units. A cooling rate of less than 50°C/minute can lead to increased crystallinity, making it more difficult to provide the gel-like sheet with suitable stretchability. Usable cooling methods include bringing the extrudate into contact with a cooling medium such as cooling air, cooling water, etc.; bringing the extrudate into contact with cooling rollers; etc.

By high polyolefin content, we mean the cooled extrudate comprises at least about 15%, for example from about 15 to about 50%, polyolefin derived from the resins of the polyolefin composition, based on the mass of the cooled extrudate. We believe that a polyolefin content of less than about 15% of the cooled extrudate makes it more difficult to form a microporous membrane structure of the present invention exhibiting the excellent set of properties. A polyolefin content of more than about 50% leads to higher viscosity which makes it more difficult to form the desired membrane structure. The cooled extrudate preferably has a polyolefin content at least as high as that of the polyolefin solution.

### (4) Stretching the cooled extrudate

The cooled extrudate, generally in the form of a high polyolefin content gel-like molding or sheet, is then stretched in at least one direction. While not wishing to be bound by any theory or model, it is believed that the gel-like sheet can be uniformly stretched because the sheet contains the diluent or solvent. The gel-like sheet is preferably stretched to a predetermined magnification after heating by, for example, a tenter method, a roll method, an inflation method or a combination thereof. The stretching may be conducted monoaxially or biaxially, though the biaxial stretching is preferable. In the case of biaxial stretching, any of simultaneous biaxial stretching, sequential stretching or multi-stage stretching (for instance, a combination of the simultaneous biaxial stretching and the sequential stretching) may be used, though the simultaneous biaxial stretching is preferable. The amount of stretch in either direction need not be the same.

The stretching magnification of this first stretching step can be, for example, 2 fold or more, preferably 3 to 30 fold in the case of monoaxial stretching. In the case of biaxial stretching, the stretching magnification can be, for example, 3 fold or more in any direction, namely 9 fold or more, preferably 16 fold or more, more preferably 25 fold or more, e.g. 49 fold or more, in area magnification. An example for this first stretching step would include stretching from about 9 fold to about 400 fold. A further example would be stretching from about 16 to about 49 fold. Again, the amount of stretch in either direction need not be the same. With the area magnification of 9 fold or more, the pin puncture strength of the microporous membrane is improved. When the area magnification is more than 400 fold, stretching apparatuses, stretching operations, etc., involve large-sized stretching apparatuses, which can be difficult to operate.

To obtain a good microporous structure for the present membrane, the stretching temperature of this first stretching step is relatively high, preferably from about the crystal dispersion temperature ("Tcd") of the combined polyethylene content of the cooled extrudate to about Tcd + 30°C, e.g. in a range of Tcd of the combined polyethylene content to Tcd + 25°C, more specifically in a range of Tcd + 10°C to Tcd + 25°C, most specifically in a range of Tcd + 15°C to Tcd + 25°C. When the stretching temperature is lower than Tcd, it is believed that the combined polyethylene content is so insufficiently softened that the gel-like sheet is easily broken by stretching, failing to achieve high-magnification stretching.

The crystal dispersion temperature is determined by measuring the temperature characteristics of dynamic viscoelasticity according to ASTM D 4065. Because the combined polyethylene content herein has a crystal dispersion temperature of about 90 to 100°C, the stretching temperature is from about 90 to 125°C; preferably form about 100 to 125°C, more preferably from 105 to 125°C.

The above stretching causes cleavage between polyolefin, e.g. polyethylene, lamellas, making the polyolefin phases finer and forming large numbers of fibrils. The fibrils form a three-dimensional network structure. The stretching is believed to improve the mechanical strength of the microporous membrane and expands its pores, making the microporous membrane suitable for use as a battery separator.

Depending on the desired properties, stretching may be conducted with a temperature distribution in a thickness direction, to provide the microporous membrane with further improved mechanical strength. The detailed description of this method is given by Japanese Patent 3347854.

### (5) Removal of the solvent or diluent

In one embodiment, a washing solvent is used for removing (washing away, displacing or dissolving) at least a portion of the diluent. Because the polyolefin composition phase is phase-separated from the diluent phase, the removal of the diluent provides a microporous membrane. The removal of the diluent can be conducted by using one or more suitable washing solvents, i.e., one capable of displacing the liquid diluent from the membrane. Examples of the washing solvents include volatile solvents, e.g., saturated hydrocarbons such as pentane, hexane, heptane, etc., chlorinated hydrocarbons such as methylene chloride, carbon tetrachloride, etc., ethers such as diethyl ether, dioxane, etc., ketones such as methyl ethyl ketone, etc., linear fluorocarbons such as trifluoroethane, C₆F₁₄, etc., cyclic hydrofluorocarbons such as C₅H₃F₇, etc., hydrofluoroethers such as C₄F₉OCH₃, C₄F₉OC₂H₅, etc., perfluoroethers such as C₄F₉OCF₃, C₄F₉OC₂F₅, etc., and mixtures thereof.

The washing of the stretched membrane can be conducted by immersion in the washing solvent and/or showering with the washing solvent. The washing solvent used is preferably from about 300 to about 30,000 parts by mass per 100 parts by mass of the stretched membrane. The washing temperature is usually from about 15 to about 30 °C, and if desired, heating may be conducted during washing. The heating temperature during washing is preferably about 80 °C or lower. Washing is preferably conducted until the amount of the remaining liquid diluent or solvent becomes less than 1% by mass of the amount of liquid solvent that was present in polyolefin solution prior to extrusion.

The microporous membrane deprived of the diluent or solvent can be dried by a heat-drying method, a wind-drying (e.g., air drying using moving air) method, etc., to remove remaining volatile components from the membrane, e.g. washing solvent. Any drying method capable of removing a significant amount of the washing solvent can be used. Preferably, substantially all of the washing solvent is removed during drying. The drying temperature is preferably equal to or lower than Tcd, more preferably 5°C or more lower than Tcd. Drying is conducted until the remaining washing solvent becomes preferably 5% or less by mass, more preferably 3% or less by mass, per 100% by mass (on a dry basis) of the microporous membrane. Insufficient drying undesirably can lead to decrease in the porosity of the microporous membrane by the subsequent heat treatment, resulting in poor permeability.

### (6) Stretching the dried membrane

The dried membrane is optionally stretched in a second stretching step (re-stretched) at least monoaxially at high magnification. The re-stretching of the membrane can be conducted, for example, while heating, by a tenter method, etc., as in the first stretching step. The re-stretching may be monoaxial or biaxial. In the case of biaxial stretching, any one of simultaneous biaxial stretching or sequential stretching may be used, though the simultaneous biaxial stretching is preferable. Because the re-stretching is usually conducted on the membrane in a long sheet form, which is obtained from the stretched gel-like sheet, the directions of MD and TD (where MD means "machine direction", i.e., the direction of membrane travel during processing, and TD means "transverse direction", i.e., a direction orthogonal to both the MD and the horizontal surface of the membrane) in the re-stretching is usually the same as those in the stretching of the cooled extrudate. In the present invention, however, the re-stretching is actually somewhat greater than that used in the stretching of the cooled extrudate. Stretching magnification in this step is from about 1.1 to about 1.8 fold in at least one direction, for example from about 1.2 to about 1.6 fold. Stretching need not be the same magnification in each direction. If stretching in step (4) of the present method is lower in the range of from about 9 to about 400, then stretching in step (6) of the present method should be higher in the range of from about 1.1 to about 1.8. Likewise, if stretching in step (4) of the present method is higher in the range of from about 9 to about 400, then stretching in step (6) of the present method should be lower in the range of from about 1.1 to about 1.8.

The optional second stretching or re-stretching is conducted at a second temperature preferably equal to Tm or lower, more preferably in a range of Tcd to Tm (of the polyethylene). When the second stretching temperature is higher than Tm, it is believed that the melt viscosity is generally too low to conduct good stretching, resulting in low permeability. When the second stretching temperature is lower than Tcd, it is believed that the polyolefin is insufficiently softened so that the membrane might be broken by stretching, i.e., a failure to achieve uniform stretching. In an embodiment, the second stretching temperature is usually from about 90 to about 135°C, preferably from about 95 to about 130°C.

The monoaxial stretching magnification of the membrane in this step, as mentioned above, is preferably from about 1.1 to about 1.8 fold. A magnification of 1.1 to 1.8 fold generally provides the membrane of the present invention with a structure having a large average pore size. In the case of monoaxial stretching, the magnification can be form 1.1 to 1.8 fold in a longitudinal or transverse direction. In the case of biaxial stretching, the membrane may be stretched at the same or different magnifications in each stretching direction, though preferably the same, as long as the stretching magnifications in both directions are within 1.1 to 1.8 fold.

When the second stretching magnification of the membrane is less than 1.1 fold, it is believed that the membrane structure of the present invention has poorer permeability, electrolytic solution absorption and compression resistance in the membrane. When the second stretching magnification is more than 1.8 fold, the fibrils formed are too fine, and it is believed that the heat shrinkage resistance and the electrolytic solution absorption characteristics of the membrane are reduced. This second stretching magnification is more preferably from 1.2 to 1.6 fold.

The stretching rate is preferably 3%/second or more in a stretching direction. In the case of monoaxial stretching, stretching rate is 3%/second or more in a longitudinal or transverse direction. In the case of biaxial stretching, stretching rate is 3%/second or more in both longitudinal and transverse directions. A stretching rate of less than 3%/second decreases the membrane's permeability, and provides the membrane with large unevenness in properties (particularly, air permeability) in a width direction when stretched in a transverse direction. The stretching rate is preferably 5%/second or more, more preferably 10%/second or more. Though not particularly critical, the upper limit of the stretching rate is preferably 50%/second to prevent rupture of the membrane.

### (7) Heat treatment

The membrane product of step (5) or step (6) is thermally treated (heat-set) to stabilize crystals and make uniform lamellas in the membrane. The heat-setting is preferably conducted by a tenter method or a roll method. The heat-setting temperature is preferably in a range of Tcd to Tm. It is believed that too low a heat-setting temperature deteriorates the membrane's pin puncture strength, tensile rupture strength, tensile rupture elongation and heat shrinkage resistance, while too high a heat-setting temperature deteriorates membrane permeability.

An annealing treatment can be conducted after the heat-setting step. The annealing is a heat treatment with no load applied to the microporous membrane, and may be conducted by using, e.g., a heating chamber with a belt conveyer or an air-floating-type heating chamber. The annealing may also be conducted continuously after the heat-setting with the tenter slackened. The annealing temperature is preferably Tm or lower, more preferably in a range from about 60°C to about Tm -5°C. Annealing is believed to provide the microporous membrane with high permeability and strength. Optionally, the membrane is annealed without prior heat-setting. In an embodiment, the heat-setting of step (7) is optional.

### (8) Heat-setting treatment of stretched sheet

The stretched sheet between steps (4) and (5) may be heat-set, provided this heat setting does not deteriorate the properties of the microporous membrane. The heat-setting method may be conducted the same way as described above for step (7).

### (9) Heat roller treatment

At least one surface of the stretched sheet from step (4) may be brought into contact with one or more heat rollers following any of steps (4) to (7). The roller temperature is preferably in a range of from Tcd +10°C to Tm. The contact time of the heat roll with the stretched sheet is preferably from about 0.5 second to about 1 minute. The heat roll may have a flat or rough surface. The heat roll may have a suction functionality to remove the solvent. Though not particularly critical, one example of a roller-heating system may comprise holding heated oil in contact with a roller surface.

### (10) Hot solvent treatment

The stretched sheet may be contacted with a hot solvent between steps (4) and (5). A hot solvent treatment turns fibrils formed by stretching to a leaf vein form with relatively thick fiber trunks, providing the microporous membrane with large pore size and suitable strength and permeability. The term "leaf vein form" means that the fibrils have thick fiber trunks, and thin fibers extending in a complicated network structure from the trunks. The details of the hot solvent treatment method are described in WO 2000/20493.

### (11) Heat-setting of membrane containing washing solvent

The microporous membrane containing a washing solvent between steps (5) and (6) may be heat-set to a degree that does not deteriorate the properties of the microporous membrane. The heat-setting method may be the same as described above in step (7).

### (12) Cross-linking

The heat-set microporous membrane may be cross-linked by ionizing radiation rays such as α-rays, β-rays, γ-rays, electron beams, etc. In the case of irradiating electron beams, the amount of electron beams is preferably from about 0.1 to about 100 Mrad, and the accelerating voltage is preferably form about 100 to about 300 kV. The cross-linking treatment elevates the melt down temperature of the microporous membrane.

### (13) Hydrophilizing treatment

The heat-set microporous membrane may be subjected to a hydrophilizing treatment (a treatment that makes the membrane more hydrophilic). The hydrophilizing treatment may be a monomer-grafting treatment, a surfactant treatment, a corona-discharging treatment, etc. The monomer-grafting treatment is preferably conducted after the cross-linking treatment.

In the case of surfactant treatment hydrophilizing the heat-set microporous membrane, any of nonionic surfactants, cationic surfactants, anionic surfactants and amphoteric surfactants may be used, and the nonionic surfactants are preferred. The microporous membrane can be dipped in a solution of the surfactant in water or a lower alcohol such as methanol, ethanol, isopropyl alcohol, etc., or coated with the solution by a doctor blade method.

### (14) Surface-coating treatment

While not required, the heat-set microporous membrane resulting from step (7) can be coated with porous polypropylene, porous fluororesins such as polyvinylidene fluoride and polytetrafluoroethylene, porous polyimides, porous polyphenylene sulfide, etc., to improve melt down properties when the membrane is used as a battery separator. The polypropylene used for the coating preferably has Mw of form about 5,000 to about 500,000, and a solubility of about 0.5 grams or more in 100 grams of toluene at 25°C. Such polypropylene more preferably has a racemic diade fraction of from about 0.12 to about 0.88, the racemic diade being a structural unit in which two adjacent monomer units are mirror-image isomers to each other. The surface-coating layer may be applied, for instance, by applying a solution of the above coating resin in a good solvent to the microporous membrane, removing part of the solvent to increase a resin concentration, thereby forming a structure in which a resin phase and a solvent phase are separated, and removing the remainder of the solvent. Examples of good solvents for this purpose include aromatic compounds, such as toluene or xylene.

### [3] Structure, properties, and composition of microporous membrane

The thickness of the final membrane is generally in the range of 3 µm to 200 µm. For example, the membrane can have a thickness in the range of from about 5 µm to about 50 µm, e.g., from about 15 µm to about 30 µm. The thickness of the microporous membrane can be measured, e.g., by a contact thickness meter at 1 cm longitudinal intervals over the width of 10 cm, and then averaged to yield the membrane thickness. Thickness meters such as the Litematic available from Mitsutoyo Corporation are suitable. Non-contact thickness measurement methods are also suitable, e.g. optical thickness measurement methods.

### (1) Structure

The microporous membrane of this invention has a structure derived from the polyethylene resins. As used herein, the term "pore size" is analogous to the pore diameter in the case where the pores are approximately cylindrical. When the percentage of the first and, optionally, the second polyethylene in the membrane is more than about 70% by mass based on the total mass of polyolefin in the membrane; or the percentage of the first and second polypropylene in the membrane is more than about 50% by mass based on the total mass of polyolefin in the membrane, the desired membrane structure is more difficult to form, resulting in poorer properties important for use as a battery separator.

Because the microporous membrane of the present invention has relatively large internal space and openings due to coarse domains, it has suitable permeability and electrolytic solution absorption, with little air permeability variation when compressed. This microporous membrane also has relatively small internal space and openings which influence safety properties of the membrane when used as a battery separator, such as shutdown temperature and shutdown speed. Accordingly, lithium ion batteries such as, for example, lithium ion secondary batteries comprising separators formed by such microporous membrane have suitable productivity and cyclability while retaining their high safety performance.

### (2) Properties

The microporous membrane of the present invention exhibits a relatively high melt down temperature, relatively high thermal stability (e.g., a low shrinkage in the molten state), and relatively high electrochemical stability, making it a superior battery separator, especially, for example, for lithium ion batteries.

A particular commercial grade battery separator has a melt down temperature of 148°C. The microporous membranes of the invention preferably have a melt down temperature of 168°C or higher. A particular commercial grade battery separator has a thermal mechanical analysis maximum shrinkage in the molten state at about 140°C of 30%, so that or lower percentages than that are preferred, i.e. 30% or less.

The microporous membrane has the following properties (l), (m) and (n). In preferred embodiments, the microporous membrane of the present invention also has at least one of the other following properties.

### (a) Air permeabilily of 700 seconds/100cm³ or less (converted to the value at 20 µm thickness)

The membrane's air permeability is measured according to JIS P8117. In an embodiment, the membrane air permeability is in the range of form 20 to 400 seconds/100 cm³. If desired, air permeability P₁ measured on a microporous membrane having a thickness T₁ according to JIS P8117 can be converted to air permeability P₂ at a thickness of 20µm by the equation of P₂ = (P₁ x 20)/T₁. In an embodiment, the membrane's air permeability is in the range of 200 seconds/100cm³ to 600 seconds/100cm³, or 270 seconds/100cm³ to 420 seconds/100cm³.

### (b) Porosity of from about 25 to about 80%

The membrane's porosity is measured conventionally by comparing the membrane's actual weight to the weight of an equivalent non-porous membrane of 100% polyethylene (equivalent in the sense of having the same length, width, and thickness). Porosity is then determined using the formula: Porosity % = 100 x (w2-w1)/w2, wherein "w1" is the actual weight of the microporous membrane and "w2" is the weight of an equivalent non-porous membrane of 100% polyethylene having the same size and thickness.

### (c) Pin puncture strength of 1500 mN or more (converted to the equivalent value for a membrane having a 20µm thickness)

The membrane's pin puncture strength (converted to the value at membrane thickness of 20µm) is represented by the maximum load measured when the microporous membrane is pricked with a needle of 1 mm in diameter with a spherical end surface (radius R of curvature: 0.5 mm) at a speed of 2 mm/second. In an embodiment, the membrane's pin puncture strength (converted to 20µm) is in the range of 1850mN to 5,000mN.

The maximum load is measured when each microporous membrane having a thickness of T₁ is pricked with a needle of 1 mm in diameter with a spherical end surface (radius R of curvature: 0.5 mm) at a speed of 2 mm/second. The measured maximum load L₁ is converted to the maximum load L₂ at a thickness of 20µm by the equation of L₂ = (L₁ x 20)/T₁, and defined as pin puncture strength.

### (d) MD and TD tensile strength of 40,000 kPa or more

A tensile strength of 40,000 kPa or more in both longitudinal and transverse directions (measured using a 10mm wide test piece according to ASTM D-882), is characteristic of suitable durable microporous membranes, particularly when used as battery separators. MD tensile strength is, e.g., in the range of about 80,000 to 150,000kPa, and TD tensile strength is, e.g., in the range of 90,000 to 150,000kPa.

### (e) Tensile elongation of 100% or more

A tensile elongation of 100% or more in both longitudinal and transverse directions (measured according to ASTM D-882), is characteristic of suitably durable microporous membranes, particularly when used as battery separators. In an embodiment, the membrane's MD tensile elongation is ≥ 140%, e.g., in the range of 140% to 180%.

### (f) TD heat shrinkage ratio at 105°C ≤ 12% and MD heat shrinkage ratio at 105°C ≤ 12%

The shrinkage ratio of the microporous membrane orthogonal planar directions (e.g., machine direction or transverse direction) at 105°C is measured as follows: (i) Measure the size of a test piece of microporous membrane at ambient temperature in both the machine direction and transverse direction, (ii) equilibrate the test piece of the microporous membrane at a temperature of 105°C for 8 hours with no applied load, and then (iii) measure the size of the membrane in both the machine and transverse directions. The heat (or "thermal") shrinkage ratio in either the machine or transverse directions can be obtained by dividing the result of measurement (i) by the result of measurement (ii) and expressing the resulting quotient as a percent.

In an embodiment, the microporous membrane has a TD heat shrinkage ratio at 105°C ≤6%, e.g., in the range of 2.5% to 5.6%, and an MD heat shrinkage ratio at 105°C ≤ 3%, e.g., in the range of 1.5% to 2.9%.

### (g) Thickness variation ratio of 20% or less after heat compression (expressed as an absolute value)

The thickness variation ratio after heat compression at 90°C under pressure of 2.2 MPa for 5 minutes is generally 20% or less per 100% of the thickness before compression. Batteries comprising microporous membrane separators with a thickness variation ratio of 20% or less have suitably large capacity and good cyclability. In an embodiment, the membrane's thickness variation ratio is in the range of 10% to 20%.

To measure the thickness variation ratio after heat compression, a microporous membrane sample is situated between a pair of highly flat plates, and heat-compressed by a press machine under a pressure of 2.2 MPa (22 kgf/cm²) at 90°C for 5 minutes, to determine an average thickness. A thickness variation ratio is calculated by the formula of (average thickness after compression - average thickness before compression) / (average thickness before compression) x 100.

In an embodiment, the thickness variation after heat compression is in the range of 5 to 17%.

### (h) Air permeability after heat compression of 1000 sec/100 cm³ or less

The microporous polyolefin membrane when heat-compressed under the above conditions generally has air permeability (Gurley value) of 1000 sec/100 cm³ or less. Batteries using such membranes have suitably large capacity and cyclability. The air permeability is preferably 970 sec/100 cm³ or less, e.g., in the range of 970 sec/100cm³ to 500 sec/cm³.

Air permeability after heat compression is measured according to JIS P8117.

### (i) Surface roughness of 3 x 10² nm or more

The surface roughness of the membrane measured by an atomic force microscope (AFM) in a dynamic force mode is generally 3 x 10² nm or more (measured as the average maximum height difference across the membrane). The membrane's surface roughness is preferably 3.2 x 10² nm or more, e.g., in the range of 320 nm to 700 nm.

### (i) Electrolytic solution absorption speed of 1.5 or greater

Using a dynamic surface tension measuring apparatus (DCAT21 with high-precision electronic balance, available from Eko Instruments Co., ltd.), a microporous membrane sample is immersed in an electrolytic solution for 600 seconds (electrolyte: 1 mol/L of LiPF₆, solvent: ethylene carbonate/dimethyl carbonate at a volume ratio of 3/7) kept at 18°C, to determine an electrolytic solution absorption speed by the formula of [weight (in grams) of microporous membrane after immersion / weight (in grams) of microporous membrane before immersion]. The electrolytic solution absorption speed is expressed by a relative value, assuming that the electrolytic solution absorption rate in the microporous membrane of Comparative Example 6 is 1. In an embodiment, the membrane's electrolytic solution absorption speed is in the range of 1.5 to 4.

### (k) Shutdown Temperature of 140°C or less

The membrane's shutdown temperature is ≤ 140°C, e.g., in the range of 130°C to 139°C. The shut down temperature of the microporous membrane is measured by a thermomechanical analyzer (TMA/SS6000 available from Seiko Instruments, Inc.) as follows: A rectangular sample of 3 mm x 50 mm is cut out of the microporous membrane such that the long axis of the sample is aligned with the transverse direction of the microporous membrane and the short axis is aligned with the machine direction. The sample is set in the thermomechanical analyzer at a chuck distance of 10 mm, i.e., the distance from the upper chuck to the lower chuck is 10mm. The lower chuck is fixed and a load of 19.6mN applied to the sample at the upper chuck. The chucks and sample are enclosed in a tube which can be heated. Starting at 30°C, the temperature inside the tube is elevated at a rate of 5°C/minute, and sample length change under the 19.6mN load is measured at intervals of 0.5 second and recorded as temperature is increased. The temperature is increased to 200°C. "Shut down temperature" is defined as the temperature of the inflection point observed at approximately the melting point of the polymer having the lowest melting point among the polymers used to produce the membrane.

### (l) Melt down temperature of 168°C or higher

Melt down temperature is measured by the following procedure: A rectangular sample of 3 mm x 50 mm is cut out of the microporous membrane such that the long axis of the sample is aligned with the transverse direction of the microporous membrane as it is produced in the process and the short axis is aligned with the machine direction. The sample is set in the thermomechanical analyzer (TMA/SS6000 available from Seiko Instruments, Inc.) at a chuck distance of 10 mm, i.e., the distance from the upper chuck to the lower chuck is 10mm. The lower chuck is fixed and a load of 19.6mN applied to the sample at the upper chuck. The chucks and sample are enclosed in a tube which can be heated. Starting at 30°C, the temperature inside the tube is elevated at a rate of 5°C/minute, and sample length change under the 19.6mN load is measured at intervals of 0.5 second and recorded as temperature is increased. The temperature is increased to 200°C. The melt down temperature of the sample is defined as the temperature at which the sample breaks, generally at a temperature in the range of about 145°C to about 200°C.

In an embodiment, the meltdown temperature is in the range of from 168°C to 175°C.

### (m) Maximum TD shrinkage in molten state of less than 10%

Maximum shrinkage in the molten state is measured by the following procedure: Using the TMA procedure described for the measurement of melt down temperature, the sample length measured in the temperature range of from 135°C to 145°C are recorded. The membrane shrinks, and the distance between the chucks decreases as the membrane shrinks. The maximum shrinkage in the molten state is defined as the sample length between the chucks measured at 23°C (L1 equal to 10mm) minus the minimum length measured generally in the range of about 135°C to about 145°C (equal to L2) divided by L1, i.e., [L1-L2]/L1*100%. The rectangular sample of 3 mm x 50 mm used is cut out of the microporous membrane such that the long axis of the sample is aligned with the transverse direction of the microporous membrane as it is produced in the process and the short axis is aligned with the machine direction.

In an embodiment, the membrane's maximum TD shrinkage in the molten state is observed to occur (TMA method above) at about 140°C. In an embodiment, the maximum TD shrinkage in the molten state is in the range of 2% to 10%.

### (n) Capacity Recovery Ratio ≥ 80%

Capacity Recovery Ratio is a property of the membrane that is related to the membrane's electrochemical stability when the membrane is used as a battery separator in a lithium ion battery. Capacity Recovery Ratio is expressed as a percent and is related to the amount of battery storage capacity that is lost after storing the battery at an elevated temperature for thirty days. For automotive batteries, such as those used for starting or powering motor means for moving an electric vehicle or hybrid electric vehicle, and for power tool batteries, a Capacity Recovery Ratio ≥ 80% is desired since those relatively high-power, high capacity applications are particularly sensitive to any loss in the battery's ability to store electric charge. The term "high-capacity" batteries generally means batteries capable of supplying 1 Ampere hour (1 Ah) or more, e.g., 2.0 Ah to 3.6 Ah.

To measure the membrane's Capacity Recovery Ratio, a membrane having a length (MD) of 70mm and a width (TD) of 60mm is located between and anode and cathode having the same planar dimensions as the membrane. The anode is made of natural graphite and the cathode is made of LiCoO₂. An electrolyte is prepared by dissolving LiPF₆ into a mixture of ethylene carbonate (EC) and methylethyl carbonate (EMC) (4/6, V/V) as 1 M solution. The electrolyte is impregnated into the membrane in the region between the anode and the cathode to complete the battery.

The charge capacity recovery ratio is measured by charging and then discharging the battery at a temperature of 23°C and recording the amount of charge supplied by the battery during discharge ("initial charge capacity"). The battery is then exposed to a temperature of 80°C for thirty days, and then cooled to 23°C. After cooling, the charge capacity is re-measured (final charge capacity"). The Capacity Recovery Ratio is defined as the final charge capacity divided by the initial charge capacity times 100%.

In an embodiment, the membrane's Capacity Recovery Ratio ≥ 80%, e.g., in the range of 80% to 100%, or 80% to 85%.

### (3) Microporous membrane composition

### (1) Polyolefin

The microporous membrane of the present invention comprises (a) from 40 to 60% of a first polyethylene having an Mw in the range of from 4.5 x 10⁵ to 6.5 x 10⁵, for example from about 5 x 10⁵ to about 6 x 10⁵, and an MWD in the range of from 3 to 5, (b) from 20 to 40% of a first polypropylene having an Mw in the range of from 0.9 x 10⁶ to 1.5 x 10⁶, and an MWD in the range of from 2 to 6, (c) from 10 to 30% of a second polypropylene having an Mw in the range of from 4 x 10⁵ to 7 x 10⁵, for example from about 5.7 x 10⁵ to about 6.6 x 10⁵, an MWD in the range of from 2 to 20, for example from about 3 to about 15, and (d) from 0 to 10% of a second polyethylene having an Mw in the range of from 1.1 x 10⁶ to 5 x 10⁶, for example from 1.2 x 10⁶ to about 3 x 10⁶, and an MWD in the range of from 4 to 6, the percentages being based on the mass of the membrane.

The microporous membrane generally comprises the same polymers used to produce the polymeric composition, in generally the same relative amounts. Washing solvent and/or process solvent (diluent) can also be present, generally in amounts less than 1 wt%-based on the weight of the microporous membrane. A small amount of polymer molecular weight degradation might occur during processing, but this is acceptable. In an embodiment where the polymer is polyolefin and the membrane is produced in a wet process, molecular weight degradation during processing, if any, causes the value of MWD of the polyolefin in the membrane to differ from the MWD of the polymer used to produce the polyolefin composition by no more than about 5%, or no more than about 1%, or no more than about 0.1%.

### [4] Battery separator

The battery separator formed from any of the above microporous membranes of the present invention has a thickness of form about 3 to about 200 µm, or from about 5 to about 50 µm, or from about 7 to about 35 µm, though the most suitable thickness is properly selected depending on the type of battery to be manufactured.

### [5] Battery

Though not particularly critical, the microporous membranes of the present invention may be used as separators for primary and secondary batteries, particularly such as lithium ion secondary batteries, lithium-polymer secondary batteries, nickel-hydrogen secondary batteries, nickel-cadmium secondary batteries, nickel-zinc secondary batteries, silver-zinc secondary batteries, particularly for lithium ion secondary batteries.

The lithium ion secondary battery comprises a cathode and an anode laminated via a separator, and the separator contains an electrolyte, usually in the form of an electrolytic solution ("electrolyte"). The electrode structure is not critical. Conventional structures are suitable. The electrode structure may be, for instance, a coin type in which a disc-shaped positive and anodes are opposing, a laminate type in which planar positive and anodes are alternately laminated, a toroidal type in which ribbon-shaped positive and anodes are wound, etc.

The cathode usually comprises a current collector, and a cathodic active material layer capable of absorbing and discharging lithium ions which is formed on the current collector. The cathodic active materials may be inorganic compounds such as transition metal oxides, composite oxides of lithium and transition metals (lithium composite oxides), transition metal sulfides, etc. The transition metals may be V, Mn, Fe, Co, Ni, etc. Preferred examples of the lithium composite oxides are lithium nickelate, lithium cobaltate, lithium manganate, laminar lithium composite oxides based on α-NaFeO₂, etc. The anode comprises a current collector, and a negative-electrode active material layer formed on the current collector. The negative-electrode active materials may be carbonaceous materials such as natural graphite, artificial graphite, coke, carbon black, etc.

The electrolytic solution can be a solution obtained by dissolving a lithium salt in an organic solvent. The lithium salt may be LiClO₄, LiPF₆, LiAsF₆, LiSbF₆, LiBF₄, LiCF₃SO₃, LiN(CF₃SO₂)₂, LiC(CF₃SO₂)₃, Li₂B₁₀Cl₁₀, LiN(C₂F₅SO₂)₂, LiPF₄(CF₃)₂, LiPF₃(C₂F₅)₃, lower aliphatic carboxylates of lithium, LiAlCl₄, etc. These lithium salts may be used alone or in combination. The organic solvent may be an organic solvent having a high boiling point and high dielectric constant such as ethylene carbonate, propylene carbonate, ethylmethyl carbonate, γ-butyrolactone, etc.; and/or organic solvents having low boiling points and low viscosity such as tetrahydrofuran, 2-methyltetrahydrofuran, dimethoxyethane, dioxolane, dimethyl carbonate, dimethyl carbonate, etc. These organic solvents may be used alone or in combination. Because the organic solvents having high dielectric constants generally have high viscosity, while those having low viscosity generally have low dielectric constants, their mixtures are preferably used.

When the battery is assembled, the separator is impregnated with the electrolytic solution, so that the separator (microporous membrane) is provided with ion permeability. The impregnation treatment is usually conducted by immersing the microporous membrane in the electrolytic solution at room temperature. When a cylindrical battery is assembled, for instance, a cathode sheet, a microporous membrane separator and an anode sheet are laminated in this order, and the resultant laminate is wound to a toroidal-type electrode assembly. The resultant electrode assembly is charged/formed into a battery can and then impregnated with the above electrolytic solution, and the battery lid acting as a cathode terminal provided with a safety valve is caulked to the battery can via a gasket to produce a battery.

The present invention will be explained in more detail referring to Examples below without intention of restricting the scope of the present invention.

### Example 1

A polyolefin composition comprising (a) 50% first polyethylene resin having an Mw of 5.6 x 10⁵ and a MWD of 4.05, (b) 37.5% first polypropylene resin having an Mw of 1.1 x 10⁶, a ΔHm of 114 J/g and a MWD of 5, (c) 12.5% second polypropylene resin having an Mw of 6.6 x 10⁵, a ΔHm of 103.3 J/g and a MWD of 11.4, and (d) no added second polyethylene resin, is prepared by dry-blending, percentages by mass of the polyolefin composition. The polyethylene resin in the composition has a melting point of 135°C, a crystal dispersion temperature of 100°C.

Twenty-five parts by mass of the resultant polyolefin composition is charged into a strong-blending double-screw extruder having an inner diameter of 58 mm and L/D of 42, and 75 parts by mass of liquid paraffin (50 cst at 40°C) is supplied to the double-screw extruder via a side feeder. Melt-blending is conducted at 210°C and 200 rpm to prepare a polyethylene solution. This polyethylene solution is extruded from a T-die mounted to the double-screw extruder. The extrudate is cooled while passing through cooling rolls controlled at 40°C, to form a cooled extrudate, i.e. gel-like sheet.

Using a tenter-stretching machine, the gel-like sheet is simultaneously biaxially stretched at 115°C to 5 fold in both longitudinal and transverse directions. The stretched gel-like sheet is fixed to an aluminum frame of 20 cm x 20 cm, immersed in a bath of methylene chloride controlled at 25°C to remove the liquid paraffin with vibration of 100 rpm for 3 minutes, and dried by an air flow at room temperature. The dried membrane is re-stretched by a batch-stretching machine to a magnification of 1.4 fold in a transverse direction at 129°C. The re-stretched membrane, which remains fixed to the batch-stretching machine, is heat-set at 125°C for 10 minutes to produce a microporous membrane.

### Example 2

Example 1 is repeated except for the first and second polypropylene resins being present in the polyolefin composition at 25% by mass.

### Example 3

Example 2 is repeated with the polyolefin composition comprising 50% first polyethylene resin having an Mw of 5.6 x 10⁵ and a MWD of 4.05; 25% by mass of the first polypropylene resin having an Mw of 1.1 x 10⁶ and an MWD of 5; and 25% by mass of the second polypropylene resin having an Mw of 6.6 x 10⁵ and an MWD of 11.4. In this example, however, there is no re-stretching prior to heat-setting.

### Example 4

Example 1 is repeated except for the polyolefin composition comprising 60% first polyethylene resin having an Mw of 5.6 x 10⁵ and a MWD of 4.05; 25% by mass of the first polypropylene resin having an Mw of 1.1 x 10⁶ and an MWD of 5; and 15% by mass of the second polypropylene resin having an Mw of 6.6 x 10⁵ and an MWD of 11.4.

### Example 5

Example 1 is repeated except for the polyolefin composition comprising 12.5% by mass of a second polypropylene resin having an Mw of 5.7 x 10⁵, an MWD of 5.9, and a ΔHm of 94.6 J/g.

### Example 6

Example 1 is repeated except for the polyolefin composition comprising 37.5% by mass of a first polypropylene resin having an Mw of 0.9 x 10⁶, an MWD of 4.5, and a ΔHm of 106 J/g.

### Example 7

Example 1 is repeated except for the polyolefin composition comprising 45% by mass of the first polyethylene resin, and 5% by mass of a second polyethylene resin having an Mw of 1.9 x 10⁶ and an MWD of 5.09.

### Example 8

Example 1 is repeated except for the polyolefin composition comprising 50% by mass of a first polyethylene resin having an Mw of 6 x 10⁵ and an MWD of 11.9.

### Comparative Example 1

Example 1 is repeated except for the polyolefin composition comprising 50% by mass of the first polyethylene resin having an Mw of 5.6 x 10⁵ and an MWD of 4.05; and 50% by mass of the first polypropylene resin having an Mw of 1.1 x 10⁶ and an MWD of 5. This polyolefin composition contains no second polypropylene resin or second polyethylene resin.

### Comparative Example 2

Comparative Example 1 is repeated except that there is no re-stretching prior to heat-setting.

### Comparative Example 3

Example 1 is repeated except for the polyolefin composition comprising 50% by mass of the first polyethylene resin having an Mw of 5.6 x 10⁵ and an MWD of 4.05; and 50% by mass of a second polypropylene resin having an Mw of 3 x 10⁵, an MWD of 8.6, and a ΔHm of 103.3 J/g. This polyolefin composition contains no first polypropylene resin or second polyethylene resin.

### Comparative Example 4

Example 1 is again repeated except for the polyolefin composition comprising 50% by mass of the first polyethylene resin having an Mw of 5.6 x 10⁵ and an MWD of 4.05; 12.5% by mass of the first polypropylene resin having an Mw of 1.1 x 10⁶ and an MWD of 5, and 37.5% by mass of a second polypropylene resin having an Mw of 3 x 10⁵, an MWD of 8.6, and a ΔHm of 103.3 J/g.

### Comparative Example 5

Example 7 is repeated except for the polyolefin composition comprising 30% first polyethylene resin having an Mw of 5.6 x 10⁵ and an MWD of 4.05; 37.5% by mass of the first polypropylene resin having an Mw of 1.1 x 10⁶, an MWD of 5, and a ΔHm of 114 J/g; 12.5% by mass of the second polypropylene resin having an Mw of 6.6 x 10⁵, an MWD of 11.4 and a ΔHm of 103.3 J/g; and 20% by mass of the second polyethylene resin having an Mw of 1.9 x 10⁶ and an MWD of 5.06.

### Comparative Example 6

Example 1 is repeated except for the polyolefin composition comprising 80% by mass of the first polyethylene resin having an Mw of 5.6 x 10⁵ and an MWD of 4.05; and 20% by mass of a second polyethylene resin having an Mw of 1.9 x 10⁶ and an MWD of 5.06. This polyolefin composition contains no first or second polypropylene resin.

The properties of the microporous membranes obtained in the Examples and Comparative Examples are measured as described above. The results are shown in Table 1.

**TABLE 1**

| **PROPERTIES** | **Ex** 1 | **Ex 2** | | **Ex 3** | **Ex 4** | **Ex 5** | **Ex 6** | | **Ex 7** | | **Ex 8** |
|---|---|---|---|---|---|---|---|---|---|---|---|
| Thickness µm | 20.0 | 19.9 | | 19.9 | 20.1 | 20.3 | 20.2 | | 20.1 | | 19.8 |
| Air Perm. | 420 | 290 | | 580 | 320 | 290 | 270 | | 310 | | 370 |
| Porosity | 40.6 | 43.1 | | 39.4 | 43.4 | 40.7 | 41.1 | | 41.3 | | 38.6 |
| Punct. Strength | 2803 | 2254 | | 1862 | 2450 | 2744 | 2744 | | 2646 | | 2548 |
| Tensile Strength | 89180 | 78400 | | 79380 | 83300 | 88200 | 87220 | | 84280 | | 83300 |
| MD//TD | 123480 | 117600 | | 93100 | 118580 | 120540 | 118580 | | 115640 | | 112700 |
| Tensile Elongation | 140 | 140 | | 140 | 160 | 150 | 150 | | 140 | | 140 |
| MD//TD | 150 | 140 | | 150 | 160 | 150 | 140 | | 140 | | 140 |
| Heat Shrinkage | 2.6 | 2.5 | | 2.4 | 2.7 | 2.4 | 2.3 | | 2.6 | | 2.5 |
| MD//TD | 4.7 | 4.6 | | 2.7 | 5.3 | 5.2 | 4.9 | | 5.6 | | 5.3 |
| Surface Roughness (x10² nm) | 3.2 | 3.3 | | 3.5 | 3.4 | 3.6 | 3.3 | | 4.2 | | 4.4 |
| Elec. Soln. Absorp. Speed | 3.7 | 3.8 | | 3.1 | 2.9 | 3.5 | 2.9 | | 1.5 | | 1.6 |
| Thick. Var. Aft. Heat Comp. % | -9 | -13 | | -15 | -10 | -8 | -9 | | -8 | | -17 |
| Air Perm. Aft. Heat Comp. | 830 | 570 | | 970 | 630 | 580 | 540 | | 600 | | 750 |
| Melt Down Temp. °C | 173 | 170 | | 170 | 168 | 170 | 174 | | 173 | | 172 |
| Max. Shrinkage % * | 4.0 | 3.9 | | 2.3 | 4.4 | 3.8 | 4.1 | | 9.6 | | 4.0 |
| Cap. Recovery Ratio % | 82 | 81 | | 81 | 80 | 80 | 80 | | 81 | | 80 |

| **PROPERTIES** | **Comp Ex 1** | | **Comp Ex 2** | | **Comp Ex 3** | **Comp Ex 4** | | **Comp Ex 5** | | **Comp Ex 6** | |
|---|---|---|---|---|---|---|---|---|---|---|---|
| Thickness µm | 19.9 | | 20.1 | | 20.2 | 20.3 | | 20.0 | | 20.4 | |
| Air Perm. | 460 | | 900 | | 10 | 250 | | 400 | | 325 | |
| Porosity | 40.3 | | 35.7 | | 45.3 | 46.1 | | 40.6 | | 43.6 | |
| Punct. Strength | 3528 | | 3234 | | 490 | 1862 | | 2940 | | 4366 | |
| Tensile Strength | 107800 | | 112700 | | 49980 | 71540 | | 93100 | | 132300 | |
| MD//TD | 127400 | | 96040 | | 61740 | 78400 | | 102900 | | 110250 | |
| Tensile Elongation | 130 | | 130 | | 120 | 130 | | 130 | | 150 | |
| MD//TD | 140 | | 150 | | 120 | 130 | | 120 | | 230 | |
| Heat Shrinkage | 3.0 | | 3.4 | | 2.2 | 2.2 | | 2.3 | | 5.5 | |
| MD//TD | 5.7 | | 3.6 | | 3.9 | 4.8 | | 5.5 | | 4.8 | |
| Surface Roughness (x 10² nm) | 3.0 | | 3.1 | | 35 | 9.3 | | 7.2 | | 2.1 | |
| Elec. Soln. Absorp. Speed | 2.2 | | 0.9 | | 3.2 | 2.8 | | 2.4 | | 1 | |
| Thick. Var. Aft. Heat Comp. % | -7 | | -10 | | -20 | -20 | | -15 | | -22 | |
| Air Perm. Aft. Heat Comp. | 1250 | | 2300 | | 30 | 510 | | 850 | | 951 | |
| Melt Down Temp. °C | 175 | | 175 | | 162 | 164 | | 169 | | 148 | |
| Max. Shrinkage % * | 12.1 | | 6.8 | | 4.4 | 4.2 | | 22.4 | | 31.0 | |
| Cap. Recovery Ratio % | 80 | | 79 | | 76 | 80 | | 81 | | 64 | |

| | | | | | | | | | | | |
|---|---|---|---|---|---|---|---|---|---|---|---|
| *Maximum Shrinkage in Molten State (% at about 140 °C) | | | | | | | | | | | |

It is noted from Table 1 that the microporous membranes of the present invention exhibit a low heat shrinkage, high melt down temperature and low shrinkage in the molten state, as well as excellent electrolytic solution absorption and capacity recovery ratio, with little variation of thickness and air permeability after heat compression, and the surface roughness as a maximum height difference was 3 x 10² nm or more. The microporous membrane of the present invention has suitable air permeability, pin puncture strength, tensile rupture strength, tensile rupture elongation and heat shrinkage resistance, as well as excellent electrolytic solution absorption, with little variation of thickness and air permeability after heat compression. On the other hand, the microporous membrane products of the Comparative Examples exhibit generally higher heat shrinkage, lower melt down temperature and higher-shrinkage in the molten state, as well as a poorer balance of properties.

Battery separators formed by the microporous polyolefin membranes of the present invention provide batteries with suitable safety, heat resistance, storage properties and productivity.

While the illustrative forms disclosed herein have been described with particularity, it will be understood that various other modifications will be apparent to and can be readily made by those skilled in the art.

When numerical lower limits and numerical upper limits are listed herein, ranges from any lower limit to any upper limit are contemplated.

## Claims

1. A microporous membrane comprising polyethylene and polypropylene and having a meltdown temperature ≥ 168°C, a maximum TD heat shrinkage in the molten state ≤ 10%, and a capacity recovery ratio ≥: 80%, wherein the microporous membrane comprises (a) from 40 to 60% of a first polyethylene, the first polyethylene having an Mw in the range of from 4.5 x 10⁵ to 6.5 x 10⁵ and an MWD of from 3 to 5, (b) from 20 to 40% of a first polypropylene having a weight average molecular weight of from 0.9 x 10⁶ to 1.5 x 10⁶, an MWD of from 2 to 6, and a ΔHm in the range of 105 ≤ ΔHm ≤ 125, (c) from 10 to 30% of a second polypropylene having an Mw of from 4 x 10⁵ to 7 x 10⁵, an MWD of from 2 to 20, and ΔHm in the range of from 90 ≤ ΔHm < 105, and (d) from 0 to 10% of a second polyethylene having an Mw of from 1.1 x 10⁶ to 5 x 10⁶ and a MWD of from 4 to 6, the percentages being based on the mass of the membrane.

2. The microporous membrane of claim 1, wherein the microporous membrane has surface roughness of 3 x 10² nm or more when measured as the average maximum height difference across the membrane by an atomic force microscope (AFM) in a dynamic force mode.

3. The microporous membrane of any of claims 1-2, wherein
(a) the first polyethylene is one or more of ethylene homopolymer or ethylene/α-olefin copolymer
(b) the first polypropylene is one or more of propylene homopolymer or propylene/α-olefin copolymer
(c) the second polypropylene is one or more of propylene homopolymer or propylene/α-olefin copolymer; and
(d) the second polyethylene is one or more of ethylene homopolymer or ethylene/α-olefin copolymer.

4. The microporous membrane of any of claims 1-3, wherein the membrane has a melt down temperature of 168°C or higher and a maximum shrinkage TD in the molten state at of 10% or less, and one or more of (1) an air permeability ≤ 700 sec/cm³, (2) a porosity ranging from 25 to 80%, (3) a pin puncture strength of 1,500 mN or more at a membrane thickness of 20 µm, (4) a tensile strength of 40,000 kPa or more, (5) an MD tensile elongation of 140% or more, (6) a heat shrinkage ratio of 12% or less, (7) a thickness variation ratio of 20% or less after heat compression, (8) an air permeability after heat compression of 1000 sec/100 cm³ or less, and (9) a surface roughness of 3.2 x 10² nm or more when measured as the average maximum height difference across the membrane by an atomic force microscope (AFM) in a dynamic force.

5. A method for producing a microporous membrane, comprising:
(1) combining a polyolefin composition and at least one diluent to form a mixture of polyolefin and diluent, the polyolefin composition comprising (a) from 40 to 60% of a first polyethylene resin having an Mw < 1.0 x 10⁶ and an MWD ≤ 100, (b) from 20 to 40% of a first polypropylene resin having an Mw ≥ 0.8 x 10⁶, an MWD ≤ 100, and a ΔHm ≥ 80 J/g, and (c) from 10 to 30% of a second polypropylene resin having an Mw < 0.8 x 10⁶, an MWD ≤ 100, and ΔHm ≥ 80 J/g,
(2) extruding the mixture through a die to form an extrudate
(3) cooling the extrudate to form a cooled extrudate
(4) stretching the cooled extrudate in at least one direction to form a stretched sheet,
(5) removing at least a portion of the diluent or from the stretched sheet to form a membrane,
(6) optionally stretching the membrane in at least one direction to form a stretched membrane, and
(7) heat-setting the membrane product of step (5) or optionally step (6) to form the microporous membrane,
wherein the polyolefin composition comprises (a) from 40 to 60% of a first polyethylene resin having an Mw of from 4.5 x 10⁵ to 6.5 x 10⁵ and a MWD in the range of 3 to 5, (b) from 20 to 40% of a first polypropylene resin having an Mw in the range of from 0.8 x 10⁶ to 2 x 10⁶, an MWD in the range of 2 to 6, and a ΔHm in the range of 105 ≤ ΔHm ≤ 125, (c) from 10 to 30% of a second polypropylene resin having an Mw in the range of from 4 x 10⁵ to 7 x 10⁵, an MWD in the range of from 2 to 20, and ΔHm in the range of 90 ≤ ΔHm < 105, and (d) from 0 to 10% of a second polyethylene resin having an Mw in the range of 1.1 x 10⁶ to 5 x 10⁶, and an MWD in the range of from 4 to 6.

6. The method of claim 5, further comprising a heat-setting treatment step (4i) between steps (4) and (5) wherein the stretched sheet is heat-set at a temperature of the stretching temperature ±5°C, a heat roll treatment step (4ii) following step (4i) and before step (5) wherein the stretched sheet contacts a heated roller at a temperature from the crystal dispersion temperature of the polyolefin composition to the melting point +10°C of the polyolefin composition, and a hot solvent treatment step (4iii) following step (4ii) and before step (5) wherein the stretched sheet is contacted with a hot solvent.

7. The method of claims 5 or 6,further comprising a heat-setting treatment step (5i) following step (5) wherein the membrane is heat-set at a temperature of the stretching temperature ±5°C, and a cross-linking step (Sii) following step (5i) wherein the heat-set membrane is cross-linked by ionizing radiation rays selected from one or more of α-rays, β-rays, γ-rays, and electron beams.

8. The method of any of claims 5-7, further comprising a hydrophilizing treatment step (7i) following step (7) wherein the heat-set microporous membrane is made more hydrophilic by one or more of a monomer-grafting treatment, a surfactant treatment, and a corona-discharging treatment.

9. The method of any of claims 5-8, further comprising a surface-coating treatment step (8) following step (7) wherein the heat-set microporous membrane is coated with one or more of a porous polypropylene, a porous fluororesin, a porous polyimide, and a porous polyphenylene sulfide.

10. The method of any of any of embodiment 5-9, wherein the diluent is liquid at room temperature and has a viscosity ranging from 30 x 10⁻⁶ to 500 x 10⁻⁶ m²/s (30 to 500 cSt) at a temperature of 25°C.

11. The method of any of claims 5-10, wherein the temperature of step (1) is from the melting point of the polyolefin composition +10°C to the melting point of the polyolefin composition +120°C.

## Patentansprüche

1. Mikroporöse Membran, die Polyethylen und Polypropylen umfasst und eine Schmelztemperatur von ≥ 168 °C, eine maximale TD-Wärmeschrumpfung von ≤ 10 % im geschmolzenen Zustand und ein Kapazitätsrückgewinnungsverhältnis von ≥ 80 % aufweist, worin die mikroporöse Membran Folgendes umfasst: (a) 40 bis 60 % eines ersten Polyethylens, wobei das erste Polyethylen ein Molekulargewicht im Bereich von 4,5 x 10⁵ bis 6,5 x 10⁵ und eine Molekulargewichtsverteilung von 3 bis 5 aufweist, (b) 20 bis 40 % eines ersten Polypropylens mit einem gewichtsmittleren Molekulargewicht von 0,9 x 10⁶ bis 1,5 x 10⁶, einer Molekulargewichtsverteilung von 2 bis 6 und einem ΔHm-Wert im Bereich von 105 ≤ ΔHm ≤ 125, (c) 10 bis 30 % eines zweiten Polypropylens mit einem Molekulargewicht von 4 x 10⁵ bis 7 x 10⁵, einer Molekulargewichtsverteilung von 2 bis 20 und einem ΔHm-Wert im Bereich von 90 ≤ ΔHm ≤ 105 und (d) 0 bis 10 % eines zweiten Polyethylens mit einem Molekulargewicht von 1,1 x 10⁶ bis 5 x 10⁶ und einer Molekulargewichtsverteilung von 4 bis 6, wobei die Prozentangaben auf der Masse der Membran basieren.

2. Mikroporöse Membran nach Anspruch 1, worin die mikroporöse Membran bei Messung durch ein Rasterkraftmikroskop (RKM) im kontaktlosen Modus als mittlere maximale Höhendifferenz über die Membran verteilt eine Oberflächenrauigkeit von 3 x 10² nm oder mehr aufweist.

3. Mikroporöse Membran nach einem der Ansprüche 1 und 2, worin
(a) das erste Polyethylen eines oder mehrere von einem Ethylenhomopolymer und einem Ethylen-α-Olefin-Copolymer ist;
(b) das zweite Polypropylen eines oder mehrere von einem Propylenhomopolymer und einem Propylen-α-Olefin-Copolymer ist;
(c) das zweite Polypropylen eines oder mehrere von einem Propylenhomopolymer und einem Propylen-α-Olefin-Copolymer ist; und
(d) das zweite Polyethylen eines oder mehrere von einem Ethylenhomopolymer und einem Ethylen-α-Olefin-Copolymer ist.

4. Mikroporöse Membran nach einem der Ansprüche 1 bis 3, worin die Membran eine Schmelztemperatur von 168 °C oder mehr und im geschmolzenen Zustand eine maximale TD-Schrumpfung von 10 % oder weniger aufweist und eines oder mehrere von (1) einer Luftdurchlässigkeit von ≤ 700 s/cm³, (2) einer Porosität im Bereich von 25 bis 80 %, (3) einer Nadeldurchstichfestigkeit von 1.500 mN oder mehr bei einer Membrandicke von 20 µm, (4) einer Zugfestigkeit von 40.000 kPa oder mehr, (5) einer MD-Zugdehnung von 140 % oder mehr, (6) einem Wärmeschrumpfungsverhältnis von 12 % oder weniger, (7) einem Dickenänderungsverhältnis von 20 % oder weniger nach Wärmekompression, (8) einer Luftdurchlässigkeit von 1000 s/100 cm³ oder weniger nach Wärmekompression und (9) einer Oberflächenrauigkeit von 3,2 x 10² nm oder mehr bei Messung durch ein Rasterkraftmikroskop (RKM) im kontaktlosen Modus als mittlere maximale Höhendifferenz über die Membran verteilt aufweist.

5. Verfahren zur Herstellung einer mikroporösen Membran, das Folgendes umfasst:
(1) das Vereinigen einer Polyolefinzusammensetzung und zumindest eines Verdünnungsmittels, um ein Gemisch aus Polyolefin und Verdünnungsmittel zu bilden, das Folgendes umfasst: (a) 40 bis 60 % eines ersten Polyethylenharzes mit einem Molekulargewicht von < 1,0 x 10⁶ und einer Molekulargewichtsverteilung von ≤ 100, (b) 20 bis 40 % eines ersten Polypropylenharzes mit einem Molekulargewicht von ≥ 0,8 x 10⁶, einer Molekulargewichtsverteilung von ≤ 100 und einem ΔHm-Wert von ≥ 80 J/g und (c) 10 bis 30 % eines zweiten Polypropylenharzes mit einem Molekulargewicht von < 0,8 x 10⁶, einer Molekulargewichtsverteilung von ≤ 100 und einem ΔHm-Wert von ≥ 80 J/g,
(2) das Extrudieren des Gemischs durch eine Düse, um ein Extrudat zu bilden,
(3) das Abkühlen des Extrudats, um ein gekühltes Extrudat zu bilden,
(4) das Strecken des gekühlten Extrudats in zumindest eine Richtung, um eine gestreckte Bahn zu bilden,
(5) das Entfernen zumindest eines Teils des Verdünnungsmittels aus der gestreckten Bahn, um eine Membran zu bilden,
(6) gegebenenfalls das Strecken der Membran in zumindest eine Richtung, um eine gestreckte Membran zu bilden, und
(7) das Thermofixieren des Membranprodukts aus Schritt (5) oder gegebenenfalls Schritt (6), um die mikroporöse Membran zu bilden,
worin die Polyolefinzusammensetzung Folgendes umfasst: (a) 40 bis 60 % eines ersten Polyethylenharzes mit einem Molekulargewicht im Bereich von 4,5 x 10⁵ bis 6,5 x 10⁵ und einer Molekulargewichtsverteilung im Bereich von 3 bis 5, (b) 20 bis 40 % eines ersten Polypropylenharzes mit einem Molekulargewicht im Bereich von 0,8 x 10⁶ bis 2 x 10⁶, einer Molekulargewichtsverteilung im Bereich von 2 bis 6 und einem ΔHm-Wert im Bereich von 105 ≤ ΔHm ≤ 125, (c) 10 bis 30 % eines zweiten Polypropylenharzes mit einem Molekulargewicht im Bereich von 4 x 10⁵ bis 7 x 10⁵, einer Molekulargewichtsverteilung im Bereich von 2 bis 20 und einem ΔHm-Wert von 90 ≤ ΔHm < 105 und (d) 0 bis 10 % eines zweiten Polyethylenharzes mit einem Molekulargewicht im Bereich von 1,1 x 10⁶ bis 5 x 10⁶ und einer Molekulargewichtsverteilung von 4 bis 6.

6. Verfahren nach Anspruch 5, das weiters Folgendes umfasst: einen Schritt (4i) der Thermofixierungsbehandlung zwischen den Schritten (4) und (5), worin die gestreckte Bahn bei einer Temperatur in Höhe der Strecktemperatur ± 5 °C thermofixiert wird, einen Schritt (4ii) der Walzenbeheizungsbehandlung nach Schritt (4i) und vor Schritt (5), worin die gestreckte Bahn mit einer erhitzten Walze bei einer Temperatur von der Kristalldispersionstemperatur der Polyolefinzusammensetzung bis zum Schmelzpunkt der Polyolefinzusammensetzung zzgl. 10 °C in Kontakt kommt, und einen Schritt (4iii) der Behandlung mit einem heißen Lösungsmittel nach Schritt (4ii) und vor Schritt (5), worin die gestreckte Bahn mit einem heißen Lösungsmittel in Kontakt kommt.

7. Verfahren nach Anspruch 5 oder 6, das weiters Folgendes umfasst: einen Schritt (5i) der Thermofixierungsbehandlung nach Schritt (5), worin die Membran bei einer Temperatur in Höhe der Strecktemperatur ± 5 °C thermofixiert wird, und einen Vernetzungsschritt (5ii) im Anschluss an Schritt (5i), worin die thermofixierte Membran durch aus einem oder mehreren von α-Strahlen, β-Strahlen, γ-Strahlen und Elektronenstrahlen ausgewählte ionisierende Strahlen vernetzt wird.

8. Verfahren nach einem der Ansprüche 5 bis 7, das weiters einen Schritt (7i) der hydrophilisierenden Behandlung umfasst, worin die thermofixierte mikroporöse Membran durch eines oder mehrere von einer Monomertransplantationsbehandlung, einer Tensidbehandlung und einer Koronaentladungsbehandlung hydrophiler gemacht wird.

9. Verfahren nach einem der Ansprüche 5 bis 8, das weiters einen Schritt (8) der Tensidüberzugsbehandlung nach Schritt (7) umfasst, worin die thermofixierte mikroporöse Membran mit einem oder mehreren von einem porösen Polypropylen, einem porösen Fluorharz, einem porösen Polyimid und einem porösen Polyphenylensulfid überzogen wird.

10. Verfahren nach einem der Ansprüche 5 bis 9, worin das Verdünnungsmittel bei Raumtemperatur flüssig ist und bei einer Temperatur von 25 °C eine Viskosität im Bereich von 30 x 10⁻⁶ bis 500 x 10⁻⁶ m²/s (30 bis 500 cSt) aufweist.

11. Verfahren nach einem der Ansprüche 5 bis 10, worin die Temperatur aus Schritt (1) vom Schmelzpunkt der Polyolefinzusammensetzung zzgl. 10 °C bis zum Schmelzpunkt der Polyolefinzusammensetzung zzgl. 120 °C reicht.

## Revendications

1. Membrane microporeuse comprenant un polyéthylène et un polypropylène et ayant une température de fusion ≥ 168°C, un thermo-rétrécissement TD maximum à l'état fondu ≤ 10%, un taux de récupération de capacité ≥ : 80 %, où la membrane microporeuse comprend (a) de 40 à 60 % d'un premier polyéthylène, le premier polyéthylène ayant un Mw dans la plage de 4,5 x 10⁵ à 6,5 x 10⁵ et un MWD de 3 à 5, (b) de 20 à 40% d'un premier polypropylène ayant une masse moléculaire moyenne en poids de 0,9 x 10⁶ à 1,5 x 10⁶, un MWD de 2 à 6, et un ΔHm dans la plage de 105 ≤ ΔHm ≤ 125, (c) de 10 à 30% d'un deuxième polypropylène ayant un Mw de 4 x 10⁵ à 7 x 10⁵, un MWD de 2 à 20, et un ΔHm dans la plage de 90 ≤ ΔHm < 105, et (d) de 0 à 10% d'un deuxième polyéthylène ayant un Mw de 1,1 x 10⁶ à 5 x 10⁶ et un MWD de 4 à 6, les pourcentages étant basés sur la masse de la membrane.

2. Membrane microporeuse selon la revendication 1, dans laquelle la membrane microporeuse possède une rugosité de surface de 3 x 10² nm ou plus lorsqu'elle est mesurée comme la différence de hauteur maximum moyenne sur la membrane par un microscope à force atomique (AFM) en mode de force dynamique.

3. Membrane microporeuse selon l'une quelconque des revendications 1 - 2, dans laquelle
(a) le premier polyéthylène est un ou plusieurs d'un homopolymère d'éthylène ou d'un copolymère d'éthylène/a-oléfine,
(b) le premier polypropylène est un ou plusieurs d'un homopolymère de propylène ou d'un copolymère de propylène/a-oléfine,
(c) le deuxième polypropylène est un ou plusieurs d'un homopolymère de propylène ou d'un copolymère de propylène/a-oléfine ; et
(d) le deuxième polyéthylène est un ou plusieurs d'un homopolymère d'éthylène ou d'un copolymère d'éthylène/a-oléfine.

4. Membrane microporeuse selon l'une quelconque des revendications 1 à 3, où la membrane possède une température de fusion de 168°C ou plus élevée et un rétrécissement maximum TD à l'état fondu de 10% au moins, et un ou plusieurs de (1) une perméabilité à l'air ≤ 700 sec/cm3, (2) une porosité dans la plage de 25 à 80%, (3) une résistance à la perforation par une épingle de 1,500 mN ou plus à une épaisseur de membrane de 20 µm, (4) une résistance à la traction de 40 000 kPa ou plus, (5) un allongement en traction MD de 140% ou plus, (6) un taux de rétrécissement thermique de 12% ou moins, (7) un taux de variation d'épaisseur de 20% ou moins après une compression thermique, (8) une perméabilité à l'air après une compression thermique de 1000 sec/100 cm3 ou moins, et (9) une rugosité de surface de 3,2 x 10² nm ou plus lorsqu'elle est mesurée comme la différence de hauteur maximum moyenne sur la membrane par un microscope à force atomique (AFM) en mode de force dynamique.

5. Procédé de production d'une membrane microporeuse, comprenant :
(1) combiner une composition de polyoléfine et au moins un diluant pour former un mélange de polyoléfine et de diluant, la composition de polyoléfine comprenant (a) de 40 à 60 % d'une première résine de polyéthylène ayant un Mw < 1,0 x 10⁶ et un MWD ≤ 100, (b) de 20 à 40% d'une première résine de polypropylène ayant un Mw ≥ 0,8 x 10⁶, un MWD ≤ 100, et un ΔHm ≥ 80 J/g, et (c) de 10 à 30 % d'une deuxième résine de polypropylène ayant un Mw < 0,8 x 10⁶, un MWD ≤ 100 et un ΔHm ≥ 80 J/g,
(2) extruder le mélange à travers une filière pour former un extrudat,
(3) refroidir l'extrudat pour former un extrudat refroidi,
(4) étirer l'extrudat refroidi dans au moins une direction pour former une feuille étirée,
(5) retirer au moins une portion du diluant ou de la feuille étirée pour former une membrane,
(6) étirer en option la membrane dans au moins une direction pour former une membrane étirée, et
(7) thermofixer le produit de membrane de l'étape (5) ou en option de l'étape (6) pour former la membrane microporeuse,
où la composition de polyoléfine comprend (a) de 40 à 60% d'une première résine de polyéthylène ayant un Mw de 4,5 x 10⁵ à 6,5 x 10⁵ et un MWD dans la plage de 3 à 5, (b) de 20 à 40% d'une première résine de polypropylène ayant un Mw dans la plage de 0,8 x 10⁶ à 2 x 10⁶, un MWD dans la plage de 2 à 6, et un ΔHm dans la plage de 105 ≤ ΔHm ≤ 125, (c) de 10 à 30% d'une deuxième résine de polypropylène ayant un Mw dans la plage de 4 x 10⁵ à 7 x 10⁵, un MWD dans la plage de 2 à 20 et un ΔHm dans la plage de 90 ≤ΔHm < 105 et (d) de 0 à 10% d'une deuxième résine de polyéthylène ayant un Mw dans la plage de 1,1 x 10⁶ à 5 x 10⁶ et un MWD dans la plage de 4 à 6.

6. Procédé selon la revendication 5, comprenant en outre une étape de traitement de thermofixage (4i) entre les étapes (4) et (5), où la feuille étirée est thermofixée à une température de la température d'étirage ± 5°C, une étape de traitement de laminage à chaud (4ii) à la suite de l'étape (4i) et avant l'étape (5) lors de laquelle la feuille étirée vient en contact avec un rouleau chauffé à une température de la température de dispersion cristalline de la composition de polyoléfine au point de fusion +10°C de la composition de polyoléfine, et une étape de traitement au solvant chaud (4iii) à la suite de l'étape (4ii) et avant l'étape (5) où la feuille étirée est amenée en contact avec un solvant chaud.

7. Procédé selon les revendications 5 ou 6, comprenant en outre une étape de traitement de thermofixage (5i) à la suite de l'étape (5), lors de laquelle la membrane est thermofixée à une température de la température d'étirage ± 5°C, et une étape de réticulation (Sii) à la suite de l'étape (5i) lors de laquelle la membrane thermofixée est réticulée par des rayons de radiation d'ionisation sélectionnés parmi un ou plusieurs de rayons a, rayons ß, rayons y et faisceaux d'électrons.

8. Procédé selon l'une quelconque des revendications 5 à 7, comprenant en outre une étape de traitement d'hydrophilisation (7i) à la suite de l'étape (7), lors de laquelle la membrane microporeuse thermofixée est rendue plus hydrophile par un ou plusieurs d'un traitement de greffe de monomères, d'un traitement à base d'agent de surface et d'un traitement de décharge corona.

9. Procédé selon l'une quelconque des revendications 5 à 8, comprenant en outre une étape de traitement de revêtement de surface (8) à la suite de l'étape (7), lors de laquelle la membrane microporeuse thermofixée est revêtue d'un ou de plusieurs parmi un polypropylène poreux, d'une résine fluorée poreuse, d'un polyimide poreux et d'une sulfure de polyphénylène poreuse.

10. Procédé selon l'une quelconque des revendications 5 à 9, dans lequel le diluant est liquide à température ambiante et possède une viscosité dans la plage de 30 x 10⁶ à 500 x 10⁶ m2/s (30 à 500 cSt) à une température de 25 °C.

11. Procédé selon l'une quelconque des revendications 5 à 10, dans lequel la température de l'étape (1) va du point de fusion de la composition de polyoléfine + 10°C au point de fusion de la composition de polyoléfine + 120°C.
